# EUROPÄISCHE PATENTSCHRIFT

(11) **EP 1 680 305 B1**
(45) Veröffentlichungstag und Bekanntmachung des Hinweises auf die Patenterteilung: **17.10.2007**
(21) Anmeldenummer: 04802636.3
(22) Anmeldetag: 21.10.2004
(51) Int. Cl.: B60R 1/12, B60R 1/06

(54) **SPIEGELGLASBAUGRUPPE MIT INTEGRIERTER LEUCHTFOLIE**
MIRROR GLASS COMPONENT COMPRISING AN INTEGRATED LUMINOUS FILM
ENSEMBLE VERRE A GLACE COMPORTANT UNE FEUILLE LUMINESCENTE INTEGREE

(30) Priorität: 23.10.2003 DE 10349742
(43) Veröffentlichungstag der Anmeldung: 19.07.2006
(73) Patentinhaber: Schefenacker Patents S.à.r.l., 2346 Luxembourg (LU)
(72) Erfinder: OEHMANN, Roland, 70188 Stuttgart (DE)
(74) Vertreter: Schmid, Rudolf
(86) Internationale Anmeldenummer: PCT/DE2004/002351
(87) Internationale Veröffentlichungsnummer: WO 2005/039925

(56) Entgegenhaltungen:
- WO-A-99/20936
- DE-A1- 19 828 253
- DE-U1- 20 217 129
- DE-U1- 20 218 383
- GB-A- 2 041 859
- US-A- 5 938 320

## Beschreibung

Die Erfindung betrifft ein Fahrzeugaußenspiegelmodul mit einer Spiegelglasbaugruppe, wobei letztere mindestens ein Spiegelglas und mindestens ein daran befestigtes Leuchtelement aufweist.

Aus der nicht vorveröffentlichten DE 103 27 072 ist ein derartiger Außenspiegel bekannt. Hinter dem Spiegelglas des Außenspiegels ist eine Heizfolie angeordnet, die über das darauf mäanderförmig verlegte Heizelement übersteht. Auf dem überstehenden Teil der Folie, der außerdem um den Rand des Spiegelglases herumgeführt wird, sind Leuchtdioden befestigt, deren Licht vor der Vorderseite des Spiegelglases austritt.

Ferner offenbart die gattungsgemäße WO 99/20936 A eine in einem Spiegelgehäuse einsetzbare Leuchtvorrichtung, bei der eine Leuchtfolie und eine Leiterplatte mit elektrischer Beschaltung hinter einer transparenten Abdeckschicht, z.B. einem Spiegelglas, angeordnet wird. Die Abdeckschicht kann ggf. so aufgebaut sein, dass sie das Licht der Leuchtfolie in eine bestimmte Richtung abstrahlt.

Aus der DE 202 17 129 U1 und der DE 202 18 383 U1 ist jeweils ein Spiegel bekannt, hinter dessen Spiegelglas z.B. mehrere ziffernförmige Leuchtfolien angeordnet sind. Die beleuchtbare Ziffernkombination gibt z.B. eine Uhrzeit an. Beide Druckschriften beschreiben den physikalischen Aufbau der Leuchtfolien.

Der vorliegenden Erfindung liegt daher die Problemstellung zugrunde ein Fahrzeugaußenspiegelmodul zu entwickeln, in dem mindestens ein Leuchtmittel bauraumsparend integriert ist und das so angeschlossen ist, dass es bei geringem Verkabelungsaufwand einfach und sicher montiert werden kann.

Diese Problemstellung wird mit den Merkmalen des Hauptanspruches gelöst. Dazu ist mindestens eines der Leuchtelemente eine Leuchtfolie. Der oder die Leuchtfolien sind hinter dem Spiegelglas angeordnet. Im Bereich der Leuchtfolien ist die Verspiegelung des Spiegelglases zumindest bereichsweise teil- bzw. halbdurchlässig. Die hinter dem Spiegelglas angeordnete Leuchtfolie oder Leuchtfolien sind Teil einer Heizfolie.

Die im Außenspiegelmodul eingebauten Leuchtelemente sind in der Regel elektrolumineszierende Folien. Diese Leuchtelemente werden z.B. neben ihrer Verdrahtung in der Heizfolie zusätzlich zum Heizelement integriert. Die derart ausgestattete Heizfolie wird dann z.B. durch Verkleben mit dem Spiegelglas und einem Spiegelglasträger zu einer Spiegelglasbaugruppe vereint.

Durch Einlegen und Verkleben der meist dünnen Heizfolie werden auf einfache Weise die Leuchtmittel zusammen mit der Spiegelheizung montiert. Da die Heizung und die Leuchtmittel beispielsweise eine gemeinsame Anschlussleiste oder einen gemeinsamen Stecker aufweisen, wird der Anschluss des Außenspiegelmoduls am Fahrzeug zusätzlich vereinfacht.

Ggf. werden neben den Leuchtfolien auch andere Leuchtmittel, z.B. Lumineszenzdioden auf der Heizfolie angeordnet. Diese Diode sitzen beispielsweise am Rand des Spiegelglases vor der Verspiegelung.

Weitere Einzelheiten der Erfindung ergeben sich aus den Unteransprüchen und der nachfolgenden Beschreibung mehrerer schematisch dargestellter Ausführungsbeispiele.
- Figur 1:: Fahrzeugaußenspiegelmodul von der Spiegelseite aus betrachtet;
- Figur 2:: Teilschnitt durch das Fahrzeugaußenspiegelmodul mit Leucht- und Durchlichtrichtungsfolie;
- Figur 3:: Heizfolie mit integrierter Leuchtfolie;
- Figur 4:: Teilschnitt mit Durchlichtrichtungsfolie;
- Figur 5:: Anordnungsplan für mehrere Leuchtfolien.

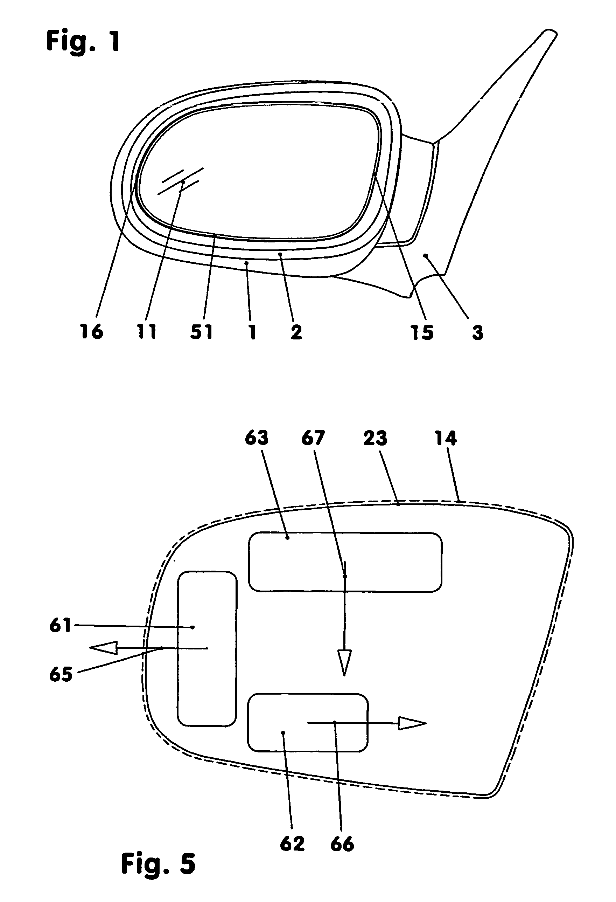

Die Figur 1 zeigt ein Fahrzeugaußenspiegelmodul, das u.a. aus einem Spiegelgehäuse (1), einem Spiegelglas (11), und einer Spiegelfußabdeckung (3) eines nicht dargestellten Spiegelfußes besteht.

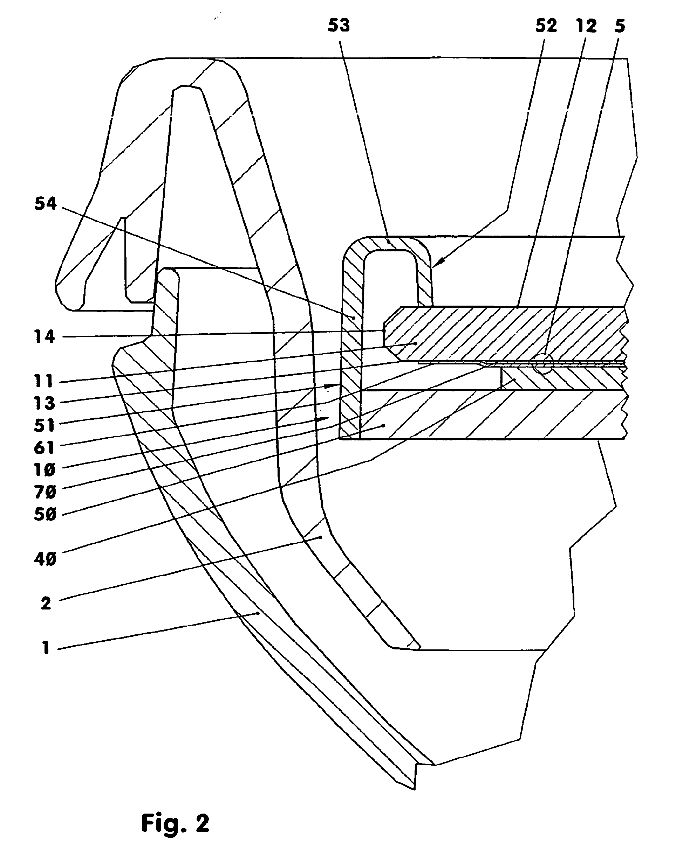

In der Figur 2 ist ein quer zum Spiegelglas (11) orientierter Teilschnitt dargestellt. Hier ist ein Spiegelglasmodul (10) seitlich und auf der Rückseite vom Spiegelgehäuse (1) und der mit diesem verrasteten oder verklebten Einfassung (2) umgeben. Das Spiegelglasmodul (10) ist im Gehäuse (1) in der Regel verstellbar gelagert. Dazu sitzt dieses Spiegelglasmodul (10) mit Spiel innerhalb der Einfassung (2).

Das Spiegelglasmodul (10) umfasst nach Figur 2 einen Spiegelglasträger (50), eine Klebefolie (40), eine Heizfolie (20) mit integrierter Leuchtfolie (61-63) und einen Spiegelglasrahmen (51). Auf dem Spiegelglasträger (50) ist das Spiegelglas (11) mittels einer Klebefolie (40) und einer ebenfalls klebenden Heiz- bzw. Kombifolie (20) befestigt. Die Klebefolie (40) ist beispielsweise ein beidseitig mit einer Klebstoffschicht ausgestatteter Moosgummi oder ein anderer dünnwandiger Elastomerkörper. Bei der Montage wird die Kombifolie (20) mit ihrer Klebeschicht auf der Rückseite (13) des Spiegelglases (11) aufgeklebt. Auf die Kombifolie (20) wiederum wird die Klebefolie (40) aufgetragen, um so das Spiegelglas (11) mit dem Spiegelglasträger (50) zu verbinden U. a. zur mechanischen Sicherung des Spiegelglases (11) am Spiegelglasträger (50) umgibt der Spiegelglasrahmen (51) den Spiegelglasträger (50). Dazu hat der Rahmen (51) einen Außenrandabschnitt (54), der an der Außenkontur des Spiegelglasträgers (50) anliegt und nach vorn über die Spiegelglasaußenseite (12) übersteht. Der Außenrandabschnitt (54) schließt mit der Spiegelglasaußenseite (12) einen Winkel kleiner oder gleich 90 Winkelgrade ein. Wenige Millimeter vor der Spiegelglasaußenseite (12) geht der Rahmen (51) in einen Abschnitt (53) über, der parallel zur Spiegelglasaußenseite (12) orientiert ist. Dieser Abschnitt (53) geht über in einen Innenrandabschnitt (52), der unter ca. 90 Winkelgraden an der Spiegelglasaußenseite (12) zur Anlage kommt.

Der Spiegelglasrahmen (51) und der Spiegelglasträger (50) sind z.B. miteinander unlösbar verschweißt oder verklebt.

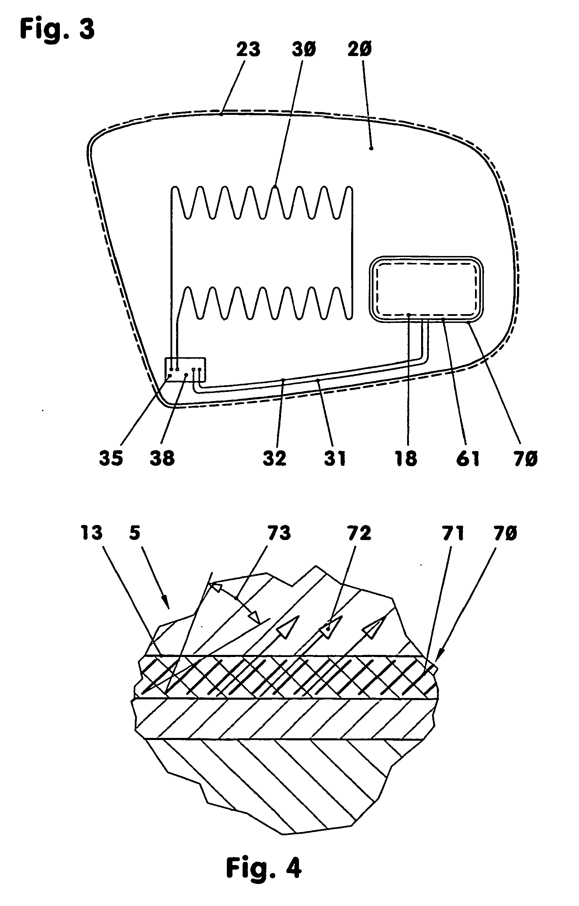

Figur 3 zeigt eine Kombifolie (20) mit einer Heizbahn (30), eine integrierte Leuchtfolie (61), eine Durchlichtrichtungsfolie (70), zwei Leiterbahnen (31, 32) und einem Anschlussstecker (35). Die Kombifolie (20) hat eine Wandstärke von ca. 0,3 bis 0,5 Millimeter. Die Folienstärke wird hierbei durch den Leuchtfolieanteil vorgegeben.

Die Leuchtfolie (61) ist eine elektroluminiszierende Folie in flexibler oder steifer Ausführung, die z.B. als Teil der Heizfolie (20) zumindest zum Spiegelglas (11) hin mit einer Selbstklebeschicht ausgestattet ist. In dem Bereich, in dem die Leuchtfolie (61) positioniert ist, ist die Verspiegelung halbdurchlässig, d.h. sie lässt das hinter der Rückseite (13) des Spiegelglases (11) in der Leuchtfolie (61) erzeugte Kaltlicht durch den Spiegel nahezu ungehindert durchscheinen, während die durch die Halbdurchlässigkeit entstandene Transparenz für den in den Rückspiegel schauenden Fahrer nicht erkennbar ist. Dies gilt zumindest für den Betriebszustand, bei dem die Leuchtfolie (61) nicht bestromt ist. Die Fläche des halbdurchlässigen Fensters (18) der Verspiegelung ist kleiner als die lichtemittierende Fläche der Leuchtfolie (61). Der Rand der lichtemittierenden Fläche liegt hinter dem vollverspiegelten Bereich des Spiegels.

Die Lichtfarbe der jeweiligen Leuchtfolie (61-63) kann dem Verwendungszweck angepasst werden.

Zwischen der Leuchtfolie (61) und dem Spiegelglas (11) ist im Ausführungsbeispiel nach den Figuren 2 und 3 eine sog. Durchlichtrichtungsfolie (70) angeordnet. Diese Folie, deren Fläche ebenfalls größer ist als die lichtemittierende Fläche der Leuchtfolie (61), ist eine transparente Kunststofffolie, deren Dicke unter einem Millimeter liegt, vgl. Figur 4. In der Folie sind zueinander parallel orientierte Mikrolamellen (71) angeordnet. Die Mikrolamellen (71) haben eine Wandstärke, die z.B. im Hundertstelbereich eines Millimeters liegen. Ihr Abstand untereinander liegt beispielsweise eine Zehnerpotenz höher. Die Mikrolamellen (71) schließen hier mit der Fläche der Spiegelrückseite (13) z.B. einen Winkel von 60 Winkelgraden ein. Demnach entspricht die primäre Lichtaustrittsrichtung der Richtung der Pfeile (72). Je nach Verwendungszweck kann der Winkel in einem Bereich von 30 bis 90 Winkelgraden liegen. Innerhalb einer Durchlichtrichtungsöffnung können diese Winkel einzelner Lamellenbereiche gegeneinander variieren.

Der sich zwischen zwei benachbarten Mikrolamellen (71) gelegene Öffnungswinkel (73) beträgt in der Regel 30 bis 40 Winkelgrade.

Die Figur 5 zeigt die Vorderseite einer Kombifolie (20) mit mehreren integrierten Leuchtfolienbereichen (61-63) ohne Heizbahn, Leiterbahnen und Anschlussstecker. Die Leuchtfolie (61) dient hier als Signalleuchte zur Anzeige eines Fahrtrichtungswechsels. Vor ihr ist eine Durchlichtrichtungsfolie platziert, deren Mikrolamellen von oben nach unten orientiert sind. Die Mikrolamellen schließen - gemessen in einer zur Fahrbahnoberfläche parallelen Ebene - mit der Siegelglasoberfläche (12) beispielsweise 20 bis 80 Winkelgrade ein. Durch diese Ausrichtung ergibt sich eine primär nach hinten und z.B. auch zur fahrzeugabgewandten Seite hin orientierte Leuchtrichtung (65), vgl. Figur 5. Folglich ist das Signallicht für den rückwärtigen und vorbeifahrenden Verkehr gut sichtbar. Der Fahrer kann das Blinken aufgrund der Mikrolamellenorientierung nicht erkennen.

Unten neben der z.B. rechteckigen Leuchtfolie (61) befindet sich eine als Anzeigeleuchte vorgesehene Leuchtfolie (62). Deren Leuchtrichtung (66) ist zum Fahrer hin orientiert. Dazu hat die vorgelagerte Durchlichtrichtungsfolie einen kleinen Lamellenwinkel von ca. 30 bis 40 Winkelgraden gegenüber der Spiegelglasoberfläche. Der rückwärtige Verkehr erkennt das Licht der Anzeigeleuchten nicht. Durch das Verwenden der Mikrolamellen ist die Anzeigeleuchte auch bei hellem Sonnenlicht noch gut erfassbar. Über die Anzeigeleuchte, die z.B. mehrere unterschiedlich geformte und separat aktivierbare Leuchtfolienbereiche - in Form von Symbolen oder von Schrift - umfasst, können dem Fahrer Informationen des elektronischen Spurwechselassistenten bzw. der Totwinkelüberwachung mitgeteilt werden.

Im oberen Spiegelbereich ist eine Leuchtfolie (63) angeordnet, die die Funktion einer Umfeldleuchte erfüllt. Sie erleichtert im Dunkeln z.B. das Aus- und Einsteigen, indem sie die Fahrbahnoberfläche neben der Fahrer- und/oder Beifahrertür ausleuchtet. Die Leuchtrichtung (67) ist dazu nach unten gerichtet. Folglich wird der rückwärtige Verkehr nicht gestört.

Im Ausführungsbeispiel befindet sich die Heizbahn (30), nach Figur 3, mit zwei mäanderförmig verlegten Abschnitten im mittleren Bereich des Spiegels. Sie (30) endet auf der Spiegelrückseite im linken, unteren Bereich im Anschlussstecker (35). Anstelle eines Anschlusssteckers (35) können die Leiterbahnen (31, 32) und die Heizbahn (30) auch in einzelnen Kontaktfahnen enden, denen dann im Fahrzeugaußenspiegelmodul über federnde Kontaktbügel im Bedarfsfall Strom zugeführt wird.

Die Leiterbahnen (31, 32) verlaufen weitgehend parallel zum Rand (23) der Kombifolie (20). Sie sind hier auf der Seite der Kombifolie (20) aufgetragen, auf der auch die Heizbahn (30) angeordnet ist. Selbstverständlich besteht auch die Möglichkeit, die einzelnen Leiterbahnen und Heizbahnen in verschiedenen, elektrisch isolierten Ebenen einer mehrschichtigen Kombi- oder Heizfolie (20) unterzubringen.

Zusätzlich können auf der Kombifolie (20), z.B. in Randbereichen, Vorschaltgeräte für die Leuchtelemente oder Teile der elektronischen Steuerung der Spiegelverstellantriebe angeordnet werden. Ggf. kann die Kombifolie zur Aufnahme diskreter Elektronikbauteile, wie IC's, bereichsweise verstärkt werden.

Entgegen dem Ausführungsbeispielen kann die Leuchtfolie (61) zusammen mit den - ggf. ebenfalls auf eine Folie aufgebrachten - Leiterbahnen (31, 32) auch separat auf der Spiegelrückseite (13) befestigt werden. Dies ist z.B. dann der Fall, wenn der Außenrückspiegel nicht beheizt ist.

### Bezugszeichenliste:

- 1: Spiegelgehäuse, Fahrzeugaußenspiegelgehäuse
- 2: Einfassung
- 3: Spiegelfußabdeckung
- 5: Ausschnitt

- 10: Spiegelglasbaugruppe
- 11: Spiegelglas
- 12: Spiegelglasaußenseite, unverspiegelt
- 13: Spiegelrückseite, verspiegelt
- 14: Spiegelrand
- 15: Spiegelrandbereich, dem Fahrer zugewandt
- 16: Spiegelrandbereich, vom Fahrer abgewandt
- 18: Spiegelteilfläche, halbdurchlässig; Fenster

- 20: Heizfolie, Kombifolie
- 23: Heizfolienrand

- 30: Heizbahn, Heizelement
- 31, 32: Leiterbahnen
- 35: Anschlussstecker, Stromanschlussstelle
- 38: Stromanschlussstelle

- 40: Klebefolie

- 50: Spiegelglasträger
- 51: Spiegelglasrahmen
- 52: Innenrandabschnitt
- 53: Abschnitt parallel zur Spiegelglasaußenseite
- 54: Außenrandabschnitt

- 61: Leuchtelement, Leuchtfolie
- 62: Leuchtelement, Leuchtfolie
- 63: Leuchtelement, Leuchtfolie

- 65: Leuchtrichtung
- 66: Leuchtrichtung
- 67: Leuchtrichtung

- 70: Durchlichtrichtungsfolie
- 71: Mikrolamellen
- 72: Leuchtrichtung, Pfeile
- 73: Leuchtwinkel

## Patentansprüche

1. Fahrzeugaußenspiegelmodul mit einer Spiegelglasbaugruppe, wobei letztere (10) mindestens ein Spiegelglas (11) und mindestens ein daran befestigtes Leuchtelement aufweist,
- wobei mindestens eines der Leuchtelemente eine Leuchtfolie (61-63) ist,
- wobei die Leuchtfolie (61-63) hinter dem Spiegelglas (11) angeordnet ist und die Verspiegelung des Spiegelglases (11) im Bereich der Leuchtfolie (61-63) zumindest bereichsweise teildurchlässig ist, **dadurch gekennzeichnet, daß** die hinter dem Spiegelglas (11) angeordnete Leuchtfolie (61-63) Teil einer Heizfolie (20) ist.

2. Fahrzeugaußenspiegelmodul gemäß Anspruch 1, **dadurch gekennzeichnet, dass** zwischen der Leuchtfolie (61-63) und dem Spiegelglas (11) eine Durchlichtrichtungsfolie (70) angeordnet ist.

3. Fahrzeugaußenspiegelmodul gemäß Anspruch 1, **dadurch gekennzeichnet, dass** die Anschlussleitungen (31, 32) der Leuchtfolie (61-63) auf der Seite der Heizfolie (20) angeordnet sind, auf der auch das Heizelement (30) angeordnet ist.

## Claims

1. Outside rear view mirror module with a heatable mirror glass sub-assembly, said mirror glass sub-assembly (10) being comprised of at least one mirror glass (11) and of at least one light device that is affixed to said mirror glass, whereby
- at least one light device is a luminous film (61-63),
- said luminous film (61-63) is placed behind said mirror glass (11,) and the reflective coating of said mirror glass (11) is transparent, at least partially, in the areas corresponding to said luminous film (61-63),
wherein
- said luminous film (61-63) mounted behind said mirror glass (11) is part of a heating film (20).

2. Outside rear view mirror module of claim 1, wherein there is a directional back light film (70) between said luminous film (61-63) and said mirror glass (11).

3. Outside rear view mirror module of claim 1, wherein the connecting wires (31, 32) of said luminous film (61-63) are mounted on the side of said heating film (20) where said heating element (30) is also to be found.

## Revendications

1. Module de rétroviseur automobile extérieur avec un ensemble en verre réfléchissant, celui-ci (10) comportant un miroir (11) et au moins un élément lumineux qui y est fixé,
- où au moins un des éléments lumineux est une feuille lumineuse (61-63),
- où ladite feuille lumineuse (61-63) est placée derrière le miroir (11) et où le revêtement réfléchissant du miroir (11) est au moins en partie transparent à hauteur de la feuille lumineuse (61-63), **caractérisé en ce que**
- la feuille lumineuse (61-63) placée derrière le miroir (11) fait partie d'une feuille chauffante (20).

2. Module de rétroviseur automobile extérieur selon revendication 1 **caractérisé en ce qu'**une feuille d'éclairage directionnel par transparence (70) est placée entre la feuille lumineuse (61-63) et le miroir (11).

3. Module de rétroviseur automobile extérieur selon revendication 1 **caractérisé en ce que** les câbles de raccordement (31, 32) de la feuille lumineuse (61-63) sont placés du côté de la feuille chauffante (20) où se trouve également l'élément chauffant (30).
